# EUROPÄISCHE PATENTANMELDUNG

(11) **EP 2 573 483 A1**
(43) Veröffentlichungstag der Anmeldung: **27.03.2013**
(21) Anmeldenummer: 11182389.4
(22) Anmeldetag: 22.09.2011
(51) Int. Cl.: F24H 8/00, F24H 9/06

(54) **Neutralisationseinheit**

(71) Anmelder: Grundfos Holding A/S, 8850 Bjerringbro (DK)
(72) Erfinder: Dal Canto, Riccardo, 57124 Livorno (IT); Lacaponi, Alessandro, San Lorenzo a Pagnatico ( Cascina ) Pisa (IT); Schomäcker, Ralf, 33739 Bielefeld (DE)
(74) Vertreter: Patentanwälte Vollmann & Hemmer

(57) **Zusammenfassung**

Die Erfindung betrifft eine Neutralisationseinheit zur Neutralisation von Kondenswasser einer Heizungsanlage, wobei die Neutralisationseinheit an ihrer Unterseite mit Standfüßen (10) versehen ist, wobei zumindest einer der Standfüße (10) in eine Ausnehmung (16) an einer Unterseite der Neutralisationseinheit eingreift und in der Ausnehmung (16) eine Anlagefläche (18) ausgebildet ist, an welcher sich der Standfuß (10) mit einer an dem Standfuß (10) ausgebildeten Stützfläche (30) in vertikaler Richtung (X) abstützt, wobei die Anlagefläche (18) und/oder die Stützfläche (30) sich bogenförmig mit einer Steigung (S) in vertikaler Richtung (X) erstrecken.

## Beschreibung

Die Erfindung betrifft eine Neutralisationseinheit zur Neutralisation von Kondenswasser einer Heizungsanlage, wobei die Neutralisationseinheit an ihrer Unterseite mit Standfüßen versehen ist.

Bekannte Neutralisationseinheiten sind üblicherweise als Behälter ausgebildet, in welchem ein Neutralisationsmittel, beispielsweise Kalkstein, Dolomit und/oder Magnesiumoxid oder ähnliches enthaltend, angeordnet ist. Durch dieses Neutralisationsmittel wird das Kondensat geleitet, um dieses zu neutralisieren, d. h. dessen PH-Wert zu erhöhen. Um den gewünschten Durchfluss des Kondensats durch die Neutralisationseinheit bzw. durch einen in der Neutralisationseinheit angeordneten Behälter mit Neutralisationsmittel zu gewährleisten, ist es erforderlich die Neutralisationseinheit beim Aufstellen auf einer Standfläche horizontal auszurichten, damit die Strömungswege im Inneren das gewünschte Gefälle aufweisen. Auf unebenen Untergrund ist es nicht immer einfach möglich, eine solche Neutralisationseinheit in der gewünschten Weise horizontal auszurichten.

Es ist daher Aufgabe der Erfindung, eine Neutralisationseinheit zur Neutralisation von Kondenswasser einer Heizungsanlage dahingehend zu verbessern, dass sie auf einfache Weise ausgerichtet werden kann.

Diese Aufgabe wird durch eine Neutralisationseinheit zur Neutralisation von Kondenswasser einer Heizungsanlage mit den in Anspruch 1 angegebenen Merkmalen gelöst. Bevorzugte Ausführungsformen ergeben sich aus den Unteransprüchen, der nachfolgenden Beschreibung sowie den beigefügten Figuren.

Die erfindungsgemäße Neutralisationseinheit weist an ihrer Unterseite Standfüße auf, mittels welcher sie auf dem Boden, d. h. einer Standfläche, aufgestellt werden kann. Beispielsweise können drei oder vier Standfüße vorgesehen sein. Wenn die Neutralisationseinheit einen im Wesentlichen rechteckigen Querschnitt aufweist, sind vorzugsweise vier Standfüße vorgesehen, wobei die Standfüße jeweils in der Nähe einer Ecke der Grundfläche angeordnet sind.

Erfindungsgemäß ist zumindest einer der Standfüße in eine Ausnehmung an der Unterseite der Neutralisationseinheit eingesetzt. Dabei ist der Standfuß vorzugsweise von unten in einer Richtung quer zur Unterseite in Längsrichtung der Ausnehmung in diese eingesetzt. An dem Standfuß ist eine Stützfläche ausgebildet, mit welcher sich der Standfuß in vertikaler Richtung an einer Anlagefläche abstützt, welche im Inneren der Ausnehmung ausgebildet ist. So werden die Gewichtskräfte der Neutralisationseinheit durch die Anlagefläche auf die Stützfläche des Standfu-βes übertragen, sodass der Standfuß die Kräfte dann auf die unter ihm liegende Fläche übertragen kann. Die Anlagefläche oder alternativ die Stützfläche oder aber beide Flächen erstrecken sich erfindungsgemäß bogenförmig und zumindest eine der Flächen, d. h. der Stützfläche und der Anlagefläche ist in vertikaler Richtung mit einer Steigung versehen. D. h. zumindest eine der Flächen bildet den Abschnitt einer schraubenförmigen Bahn. Dadurch wird erreicht, dass durch Änderung der Winkelposition des Standfußes in der Ausnehmung gleichzeitig die Lage des Standfußes in Richtung der Längsachse der Ausnehmung geändert wird, d. h. insbesondere die vertikale Position der Unterseite des Standfußes relativ zu der Ausnehmung bzw. der Unterseite der Neutralisationseinheit verändert wird. D. h. durch Änderung der Winkelposition um die sich quer zur Unterseite erstreckende Längsachse der Ausnehmung wird das Maß geändert, um welches der Standfuß nach außen aus der Ausnehmung vorsteht. Auf diese Weise kann die Höhe des Standfußes angepasst werden und so eine Ausrichtung der Neutralisationseinheit in vertikaler Richtung an der Position des Standfußes erreicht werden. Durch Veränderung der Höhe des Standfußes an einer Seite oder Ecke der Neutralisationseinheit kann diese in gewünschter Weise horizontal ausgerichtet werden, sodass sie eine vorbestimmte Lage bezüglich der Horizontalen, vorzugsweise in zwei Richtungen, einnimmt.

Vorzugsweise sind mehrere oder besonders bevorzugt alle Standfüße der Neutralisationseinheit jeweils in der vorangehend beschrieben Weise in eine Ausnehmung an einer Unterseite der Neutralisationseinheit eingesetzt. D. h. jeder der Standfüße greift in eine Ausnehmung ein, wobei in der Ausnehmung jeweils eine Anlagefläche ausgebildet ist, an welcher sich der Standfuß mit einer an dem Standfuß ausgebildeten Stützfläche in vertikaler Richtung abstützt, wobei die Anlagefläche und/oder die Stützfläche sich bogenförmig mit einer Steigung in vertikaler Richtung erstrecken. Auf diese Weise können mehrere oder alle Standfüße durch Drehung in der vorangehend beschriebenen Weise weiter in die Ausnehmung herein bewegt oder weiter aus der Ausnehmung heraus bewegt werden, wobei die vertikale Höhe der Standfüße verändert wird. So wird eine noch genauere Ausrichtung der Neutralisationseinheit und Anpassung an unebene bzw. schräge Aufstellflächen möglich.

Besonders bevorzugt ist der Standfuß in der Ausnehmung drehbar. So wird eine Ausrichtung in vertikaler Richtung durch einfache Drehung des Standfußes möglich. Dabei gleiten die Stützfläche und die Anlagefläche vorzugsweise aneinander entlang und es kommt aufgrund der beschriebenen Steigung zu einer Verlagerung des Standfußes in Längsrichtung der Ausnehmung, d. h. vorzugsweise in vertikaler Richtung. Um den Standfuß leicht drehen zu können, ist dieser vorzugsweise in einem Abschnitt, welcher aus der Ausnehmung herausragt, mit einer Riffelung bzw. Strukturierung am Außenumfang versehen, sodass er leicht ergriffen werden kann. Er könnten in diesem Abschnitt auch Anlageflächen für ein Werkzeug, beispielsweise für einen Schraubenschlüssel ausgebildet sein, um den Standfuß leicht drehen zu können.

Weiter bevorzugt ist zwischen der Ausnehmung und dem Standfuß zumindest ein Anschlag angeordnet, welcher den Drehwinkel zwischen der Ausnehmung und dem Standfuß begrenzt. Der zugelassene Drehwinkel ist vorzugsweise < 360°. Besonders bevorzugt sind zwei Anschläge vorgesehen, welche zwei Endlagen für die Drehbewegung definieren. So entspricht eine Endlage aufgrund der Steigung der Anlagefläche und/oder der Stützfläche der Position, an welcher der Standfuß minimal aus der Ausnehmung nach außen auskragt, und die andere Endlage der Position, an welcher der Standfuß maximal aus der Ausnehmung nach außen auskragt. Aufgrund des begrenzten Drehwinkels von < 360° ist die bogeförmige und ansteigende Fläche so ausgebildet, dass sie weniger als eine Schraubenwindung darstellt. Mit ausreichend großer Steigung kann so ein großer axialer Verstellweg des Standfußes bei kleiner Drehung erreicht werden.

Um die Drehung des Standfußes in der Ausnehmung zu ermöglichen, weisen die Ausnehmung und ein in die Ausnehmung eingreifender Abschnitt des Standfußes vorzugsweise einen kreisförmigen Querschnitt auf. Der kreisförmige Querschnitt erstreckt sich konzentrisch um die Längsachse der Ausnehmung, vorzugsweise die vertikale Achse, entlang derer der Standfuß in der Ausnehmung axial verstellt wird. Vorzugsweise liegt die Außenumfangsfläche des Standfußes an einer Innenumfangsfläche der Ausnehmung an, sodass diese ineinander geführt sind.

Besonders bevorzugt ist der Standfuß aus der Ausnehmung axial entnehmbar. Dies ist insbesondere dann möglich, wenn die Stützfläche und die Anlagefläche sich lediglich über einen Bogen von < 360° erstrecken, da dann kein gewindeähnlicher Eingriff zwischen beiden erzielt wird. Die axiale Entnehmbarkeit ermöglicht es, die Standfüße leicht abzunehmen, wenn sie nicht benötigt werden, beispielsweise weil die Neutralisationseinheit an der Wand befestigt wird oder auf eine andere Baugruppe, wie beispielsweise eine Hebeeinheit von oben aufgesetzt wird. Auch sind die Standfüße auf diese Weise leicht montierbar, da sie in axialer Richtung einfach in die Ausnehmungen eingesteckt werden können und zur Montage nicht geschraubt werden müssen.

Bevorzugt ist der Standfuß aus einem elastischen Material gefertigt. Auf diese Weise wird eine Dämpfung beim Aufstellen erreicht, darüber hinaus eine Rutschfestigkeit der Aufstellfläche gewährleistet. Darüber hinaus kann auf diese Weise eine gewisse Klemmung in der Ausnehmung erreicht werden, welche ein unerwünschtes Verdrehen oder axiales Verschieben des Standfußes in der Ausnehmung verhindert.

Gemäß einer besonders bevorzugten Ausführungsform der Erfindung wird die Ausnehmung von einer stirnseitigen Öffnung und einen Innenraum eines rohrförmigen Fußelementes gebildet. Bevorzugt weist die Neutralisationseinheit mehrere, insbesondere vier derartige Fußelemente auf, an deren Unterseite jeweils ein Standfuß gemäß der vorangehenden Beschreibung in die stirnseitige Öffnung des rohrförmigen Fußelementes eingesetzt ist, sodass das Fußelement aus der stirnseitigen Öffnung nach unten vorsteht. Im Innenraum des rohrförmigen Fußelementes ist dann die oben beschriebene Anlagefläche ausgebildet.

Ein solches rohrförmiges Fußelement kann gleichzeitig ein Austrittsrohr der Neutralisationseinheit bilden. Bevorzugt sind mehrere, insbesondere vier derartige Fußelemente vorgesehen, wobei zumindest eines, bevorzugt jedoch alle dieser Fußelemente die Funktion eines Austrittsrohres der Neutralisationseinheit bilden. Aus diesen Austrittsrohren tritt dann das neutralisierte Kondensat aus, um entweder einem Abfluss oder gegebenenfalls einer nachfolgend angeordneten Hebeeinheit zugeleitet zu werden, welche das Kondensat dann in eine Abflussleitung pumpt.

Die Standfüße sind bevorzugt so ausgebildet, dass sie die Ausnehmung, in welche sie eingesetzt sind, nach außen abdichten. Dies ermöglicht es, dass der Standfuß, dann wenn die Ausnehmung gleichzeitig eine Austrittsöffnung bildet, dazu verwendet werden kann, die Ausnehmung nach außen dicht zu verschließen. Es kann beispielsweise, wenn die Neutralisationseinheit direkt auf eine Hebeeinheit aufgesetzt wird, der Standfuß aus der Ausnehmung entnommen werden, sodass die Ausnehmung offen ausgebildet ist und als Austrittsöffnung fungieren kann, aus welcher das neutralisierte Kondensat austritt und in die darunterliegende Hebeeinheit eintritt. Wenn jedoch dieselbe Neutralisationseinheit auf dem Boden aufgestellt wird, kann durch Einsetzen des Standfußes in die Ausnehmung bzw. das die Ausnehmung bildende Austrittsrohr die Ausnehmung verschlossen werden, sodass das Kondensat dort nicht austreten kann. Zum Austritt des Kondensats kann dann eine spezielle, beispielsweise seitlich angeordnete Austrittsöffnung verwendet werden, welche dann geöffnet wird. Dies bedeutet, dass der Standfuß eine Doppelfunktion übernimmt, zum einen die Ausrichtung der Neutralisationseinheit in horizontaler Richtung ermöglicht und zum anderen gleichzeitig den dichten Verschluss eines Austrittsrohres bzw. einer Austrittsöffnung dient, wenn diese nicht benötigt wird. Dabei ist es zweckmäßig, wenn der Standfuß aus einem elastischen Material gefertigt ist, da er dann nach Art eines elastischen Stopfens in die Ausnehmung dichtend eingesetzt werden kann. Alternativ kann der Standfuß an seiner Umfangsfläche eine Dichtung, z. B. einen O-Ring aufweisen, welche dicht an einer Wandung der Ausnehmung anliegt.

Um die Funktion als Austrittsrohr bzw. Austrittsleitung der Ausnehmung sicherzustellen, ist es bevorzugt, dass die Anlagefläche in der Ausnehmung sich bogen- oder ringförmig um eine zentrale Öffnung erstreckt. Die zentrale Öffnung definiert einen Strömungsweg, durch welchen Kondensat an der Anlagefläche vorbei aus der Ausnehmung austreten kann.

Die Stützfläche an dem Standfuß wird vorzugsweise von der Stirnseite eines axialen Vorsprunges des Standfußes gebildet. Die Seitenflächen dieses axialen Vorsprunges können gleichzeitig Anschläge bilden, welche den Drehwinkel des Standfußes begrenzen. Dazu kann eine korrespondiere Anschlagfläche oder ein Anschlagelement in Form eines radial nach innen gerichteten Vorsprunges an einer Umfangswandung der Ausnehmung vorgesehen sein, an welche der Vorsprung mit seinen Seitenflächen anschlägt.

Der Standfuß weist weiter bevorzugt eine ringförmige Kontaktfläche auf, welche an einer Innenwandung der Ausnehmung dichtend anliegt. Dies ist vorzugsweise ein Bereich der Innenwandung der Ausnehmung, welcher zwischen der schraubenabschnittförmigen Anlagefläche der Ausnehmung und der Öffnung der Ausnehmung, durch welche sich der Standfuß nach außen erstreckt, gelegen ist. Die Anlage- bzw. Kontaktfläche des Standfußes weist dabei eine axiale Länge auf, welche größer ist als die Steigung der Anlagefläche und/oder der Steigung der Stützfläche. D. h. die Kontaktfläche ist länger als der axiale Verstellweg des Standfußes in der Ausnehmung. Auf diese Weise wird sichergestellt, dass auch dann, wenn der Standfuß in seiner maximal aus der Ausnehmung nach außen hervorstehenden Position befindet, eine dichtende Anlage zwischen der Kontaktfläche und der Innenwandung der Ausnehmung gegeben ist, sodass die Ausnehmung nach außen dicht verschlossen ist. An der ringförmigen Kontaktfläche können Dichtungsringe ausgebildet oder angeordnet sein, welche dichtend an der Innenwandung der Ausnehmung anliegen.

Nachfolgend wird die Erfindung beispielhaft anhand der beigefügten Figuren beschrieben. In diesen zeigt:
- Fig. 1: eine Schnittansicht einer erfindungsgemäßen Neutralisationseinheit,
- Fig. 2: eine Detailansicht eines Standfußes der Neutrolisationseinheit gemäß Fig. 1 im Schnitt und
- Fig. 3: eine Detailansicht eines Standfußes in einer gegenüber Fig. 2 entgegengesetzt gerichteten Schnittansicht.

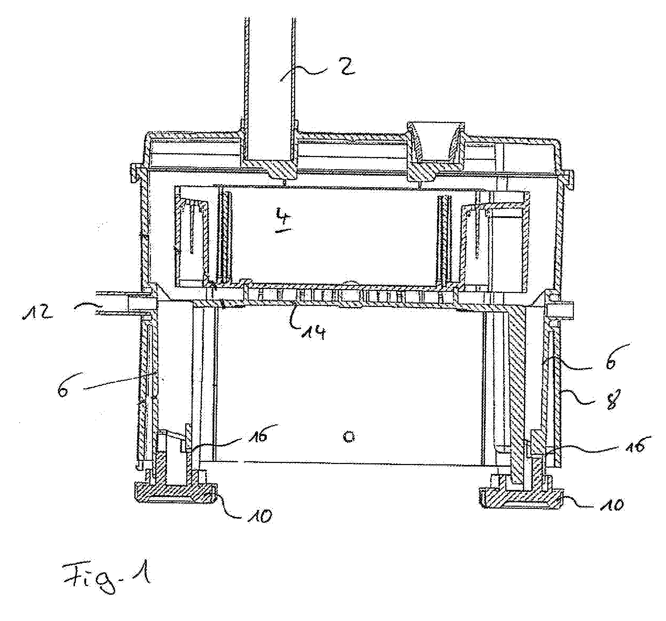

Fig. 1 zeigt eine Schnittansicht einer erfindungsgemäßen Neutralisationseinheit. Die Neutralisationseinheit weist eine Zuführleitung 2 auf, welche in einen Aufnahmeraum 4 mündet. Dieser Aufnahmeraum 4 kann mit einem Neutralisationsmittel, beispielsweise Dolomit, Magnesiumoxid oder ähnliches enthaltend gefüllt werden. Vorzugsweise ist der Aufnahmeraum 4 mit einem granulatförmigen Neutralisationsmittel gefüllt. Ausgehend von dem Aufnahmeraum 4 erstrecken sich an den Ecken vier rohrförmige Fußelemente 6 nach unten. Umfangsseitig sind die rohrförmigen Fußelemente und die Freiräume zwischen ihnen durch eine Außenwand 8 verkleidet. In dem in Fig. 1 gezeigten Beispiel sind die rohrförmigen Fußelemente an ihrer Unterseite durch Standfüße 10 verschlossen. Mit den Stanfüßen 10 steht die Neutralisationseinheit auf dem Boden auf. Das Innere der rohrförmigen Fußelemente 6 ist mit dem Aufnahmeraum 4 verbunden, sodass Kondensat, welches durch die Zuführleitung einströmt und durch den Aufnahmeraum 4 und das darin angeordnete Granulat bzw. Neutralisationsmittel geflossen ist, in die rohrförmigen Standfüße 10 einläuft. Da in diesem Ausführungsbeispiel die rohrförmigen Fußelemente 6 durch die Standfüße 10 verschlossen sind, kann das Kondensat nicht durch die rohrförmigen Fußelemente ablaufen. Daher läuft es bei dieser Anordnung durch eine seitliche Austrittsöffnung 12 ab, welche unterhalb des Bodens 14 des Aufnahmeraumes 4 am oberen Ende der rohrförmigen Fußelemente 6 angeordnet ist. Es wird somit zunächst das rohrförmige Fußelement 6 voll laufen bis das Kondensat dann durch die seitliche Austrittsöffnung abläuft.

Erfindungsgemäß sind die Standfüße 10 so in die offenen Enden der rohrförmigen Fußelemente 6, welche eine Ausnehmung 16 bilden, eingesetzt, dass sie in vertikaler Richtung X verstellbar sind, um die Neutralisationseinheit horizontal ausrichten zu können, sodass sich der Boden 14 im Wesentlichen horizontal erstreckt. Dafür sind alle vier Füße der Neutralisationseinheit, welche durch vier rohrförmige Fußelemente mit daran am unteren Ende angeordneten Standfüßen 10 gebildet werden, in entsprechender Weise höhenverstellbar ausgebildet.

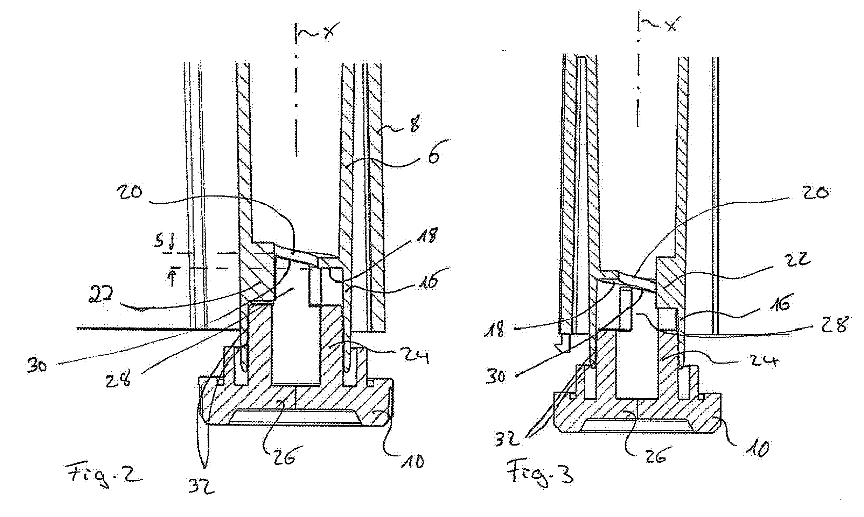

Wie in Fig. 2 zu erkennen ist, ist am Innenumfang der Ausnehmung 16, welche vom Innenraum am unteren Ende des rohrförmigen Fußelementes 6 gebildet wird, eine sich schraubenförmig erstreckende Anlagefläche 18 ausgebildet. Die Anlagefläche 18 ist in Form eines radial nach innen gerichteten Vorsprunges an der Innenwand der Ausnehmung 16 ausgebildet. Dabei erstreckt sich die Anlagefläche 18 ringförmig um eine zentrale Öffnung 20 herum. Die Anlagefläche 18 hat über ihre umfängliche Erstreckung eine Steigung S in vertikaler Richtung wie in Fig. 2 eingezeichnet. Die Anlagefläche 18 erstreckt sich dabei jedoch lediglich einmal um den Innenumfang der Ausnehmung 16, d. h. über einen Winkel von < 360°.

Die ringförmig und schraubenabschnittsförmig verlaufende Anlagefläche 18 beginnt und endet an einem Anschlagsteg 22. Der Anschlagsteg 22 erstreckt sich ausgehend von der Innenwandung der Ausnehmung 16 radial nach Innen quer zur Erstreckungsrichtung der Anlagefläche 18, d. h. in Richtung der sich vertikal erstreckenden Längsachse X der Ausnehmung 16.

In die Ausnehmung 16 greift der Standfuß 10 mit einem im Querschnitt kreisförmigen Eingriffsabschnitt 24 ein. Dabei weist der Eingriffsabschnitt 24 einen Außendurchmesser auf, welcher im Wesentlichen dem Innendurchmesser der Ausnehmung 16 entspricht oder geringfügig größer ist, sodass die Umfangswandung des Eingriffsabschnittes 24 an der Innenumfangsfläche des Ausnehmung 16 dichtend zur Anlage kommen kann. Der Eingriffsabschnitt 24 ist hier ebenfalls rohrförmig ausgebildet und an seinem unteren Ende durch den Bodenabschnitt 26 des Standfußes 10 verschlossen. Auf diese Weise verschließt der Standfuß 10, wenn er mit seinem Eingriffsabschnitt 24 in die Ausnehmung 16 eingesetzt ist, die Öffnung der Ausnehmung 16 und somit das untere Ende des rohrförmigen Fußelementes 6 dicht. So kann keine Flüssigkeit mehr aus dem unteren Ende des rohrförmigen Fußelementes 6 austreten.

An seinem dem Bodenabschnitt 6 abgewandten Ende weist der rohrförmige Eingriffsabschnitt 24 einen sich nur über einen Teilbereich des Umfanges erstreckenden axialen Vorsprung 28 auf. An seinem dem Eingriffsabschnitt 24 abgewandten freien Axialenden weist der axiale Vorsprung 28 eine Stützfläche 30 auf. Die Stützfläche 30 wird von der axialen Stirnfläche des Vorsprunges 28 gebildet. Der Vorsprung 28 erstreckt sich als Verlängerung der Umfangswandung des rohrförmigen Eingriffsabschnittes 24 angrenzend an den Innenumfang der Ausnehmung 16. Die stirnseitige Stützfläche 30 verläuft dabei ebenfalls schräg zur Längsachse X und zur Horizontalen, korrespondierend schraubenförmig gekrümmt wie die Anlagefläche 18 in der Ausnehmung 16. So kann die Stützfläche 30 flächig an der Anlagefläche 18 zur Anlage kommen.

Wenn der Standfuß in der Ausnehmung 16 um die Längsachse X gedreht wird, verschiebt sich die Stützfläche 30 entlang der Anlagefläche 18, wodurch aufgrund des schrägen Verlaufes bzw. der Steigung S der Anlagefläche 18 eine axiale Verschiebung des Standfußes 10 in vertikaler Richtung bewirkt wird. Auf diese Weise kann die Höhe des Standfu-βes 10, mit welcher dieser über das untere Ende des rohrförmigen Fußelementes 6 nach unten vorsteht, variiert werden. So lässt sich die gesamte Neutralisationseinheit derart ausrichten, dass der Boden 14 im Wesentlichen horizontal erstreckt.

In Fig. 2 ist der Standfuß 10 in einer weiter in die Ausnehmung 16 eingeschobenen Position gezeigt als in Fig. 3. Der Drehwinkel des Standfußes 10 in der Ausnehmung 16 wird durch den Anschlagsteg 22 begrenzt. Jeweils eine der sich im Wesentlichen radial bezüglich der Längsachse X erstreckenden Seitenflächen des Vorsprunges 28 kommt in einer Endlage an diesem Anschlagsteg 22 zur Anlage, wodurch dann eine weitere Drehung des Standfußes 10 in der Ausnehmung 16 in diese Drehrichtung blockiert wird.

Wir in Fig. 2 und 3 zu sehen ist, ist die axiale Ausdehnung des rohrförmigen Eingriffsabschnittes 24 länger als der Verstellweg des Standfußes 10 in axialer Richtung X, d. h. die Steigung S. Dadurch wird erreicht, dass auch in der Position, in welcher Standfuß 10 maximal aus dem unteren Ende des rohrförmigen Fußelementes 6 hervorsteht, die Außenumfangsfläche des Eingriffsabschnittes 24 immer noch dichtend an der Innenumfangsfläche der Ausnehmung 16 anliegt, sodass das rohrförmige Fußelement 6 durch den Standfuß 10 nach unten dicht verschlossen bleibt. Der Standfuß 10 und insbesondere der Eingriffsabschnitt 24 sind aus einem elastischen Material, vorzugsweise einem Elastomer oder Gummi gebildet, sodass der Eingriffsabschnitt 24 unter einer gewissen Vorspannung in die Ausnehmung 16 eingesetzt werden kann, sodass er mit seiner Außenumfangsfläche in dichtender Anlage an der Innenumfangsfläche der Ausnehmung 16 gehalten wird. Zusätzlich sind an dem Eingriffsabschnitt 24 am Außenumfang ringförmige Vorsprünge 32 ausgebildet, welche die Funktion eines Dichtringes haben und in dichter Anlage an die Innenumfangsfläche der Ausnehmung 16 gepresst werden. Es wäre auch möglich, zur Abdichtung nur die Vorsprünge 32 aus einem elastischen Material zu fertigen.

Da die Anlagefläche 18 sich über einen Winkel von weniger als 360° erstreckt und es somit keinen Eingriff nach Art eines Gewindes gibt, ist es weiterhin möglich, den Standfuß 10 in axialer Richtung X aus der Ausnehmung 16 herauszuziehen oder umgekehrt in dieser Richtung in die Ausnehmung 16 einzustecken. So kann der Standfuß 10 nach Art eines Stopfens in die Ausnehmung 16 eingesteckt werden, um diese zu verschließen. Umgekehrt kann er leicht entnommen werden, wenn die Standfüße 10 nicht benötigt werden, weil die Neutralisationseinheit beispielsweise direkt auf eine Hebeeinheit oder eine weiter Baueinheit aufgesetzt wird, sodass die rohrförmigen Fußelemente 6 als Austrittsleitungen genutzt werden. So kann sich an das untere Ende der Ausnehmung 16, welche dann geöffnet ist, eine Eintrittsöffnung einer sich anschließenden weiteren Baugruppe, beispielsweise einer Hebeeinheit anschließen, sodass das Wasser bzw. Kondensat aus dem rohrförmigen Fußelement 6 direkt in die sich anschließende Baugruppe fließen kann. Durch die zentrale Öffnung 20 in der Anlagefläche 18 ist dabei der Ausfluss von Kondensat aus dem unteren Ende des rohrförmigen Fußelementes 6 weiter gewährleistet.

### Bezugszeichenliste

- 2: Zuführleitung
- 4: Aufnahmeraum
- 6: Rohrförmige Fußelemente
- 8: Außenwand
- 10: Standfuß
- 12: Austrittsöffnung
- 14: Boden
- 16: Ausnehmung
- 18: Anlagefläche
- 20: Zentrale Öffnung
- 22: Anschlagsteg
- 24: Eingriffsabschnitt
- 26: Bodenabschnitt
- 28: Axialer Vorsprung
- 30: Stützfläche
- 32: Ringförmige Vorsprünge

- S: Steigung
- X: Längsachse

## Patentansprüche

1. Neutralisationseinheit zur Neutralisation von Kondenswasser einer Heizungsanlage, wobei die Neutralisationseinheit an ihrer Unterseite mit Standfüßen (10) versehen ist,
**dadurch gekennzeichnet, dass**
zumindest einer der Standfüße (10) in eine Ausnehmung (16) an einer Unterseite der Neutralisationseinheit eingreift und in der Ausnehmung (16) eine Anlagefläche (18) ausgebildet ist, an welcher sich der Standfuß (10) mit einer an dem Standfuß (10) ausgebildeten Stützfläche (30) in vertikaler Richtung (X) abstützt, wobei die Anlagefläche (18) und/oder die Stützfläche (30) sich bogenförmig mit einer Steigung (S) in vertikaler Richtung (X) erstrecken.

2. Neutralisationseinheit nach Anspruch 1, **dadurch gekennzeichnet, dass** mehrere und vorzugsweise alle Standfüße (10) jeweils in eine Ausnehmung (16) an einer Unterseite der Neutralisationseinheit eingreifen und in der Ausnehmung (16) jeweils eine Anlagefläche (18) ausgebildet ist, an welcher sich der Standfuß (10) mit einer an dem Standfuß (10) ausgebildeten Stützfläche (30) in vertikaler Richtung (X) abstützt, wobei die Anlagefläche (18) und/oder die Stützfläche (30) sich bogenförmig mit einer Steigung (S) in vertikaler Richtung (X) erstrecken.

3. Neutralisationseinheit nach Anspruch 1 oder 2, **dadurch gekennzeichnet, dass** der Standfuß (10) in der Ausnehmung (16) drehbar ist.

4. Neutralisationseinheit nach einem der vorangehenden Ansprüche,
**dadurch gekennzeichnet, dass** zwischen der Ausnehmung (16) und dem Standfuß (10) zumindest ein Anschlag (22) angeordnet ist, welcher den Drehwinkel zwischen der Ausnehmung (16) und dem Standfuß (10) begrenzt.

5. Neutralisationseinheit nach einem der vorangehenden Ansprüche,
**dadurch gekennzeichnet, dass** die Ausnehmung (16) und ein in die Ausnehmung (16) eingreifender Abschnitt (24) des Standfußes (10) einen kreisförmigen Querschnitt aufweisen.

6. Neutralisationseinheit nach einem der vorangehenden Ansprüche,
**dadurch gekennzeichnet, dass** der Standfuß (10) aus der Ausnehmung (16) axial (X) entnehmbarist.

7. Neutralisationseinheit nach einem der vorangehenden Ansprüche,
**dadurch gekennzeichnet, dass** der Standfuß (10) aus einem elastischen Material gefertigt ist.

8. Neutralisationseinheit nach Anspruch 7, **dadurch gekennzeichnet, dass** der Standfuß (10) aus einem Elastomer oder Gummi gefertigt ist.

9. Neutralisationseinheit nach einem der vorangehenden Ansprüche,
**dadurch gekennzeichnet, dass** die Ausnehmung (16) von einer stirnseitigen Öffnung und einem Innenraum eines rohrförmigen Fußelementes (6) gebildet wird.

10. Neutralisationseinheit nach Anspruch 9, **dadurch gekennzeichnet, dass** das rohrförmige Fußelement (6) ein Austrittsrohr der Neutralisationseinheit ist.

11. Neutralisationseinheit nach einem der vorangehenden Ansprüche,
**dadurch gekennzeichnet, dass** der Standfuß (10) die Ausnehmung (16) nach außen dicht verschließt.

12. Neutralisationseinheit nach einem der vorangehenden Ansprüche,
**dadurch gekennzeichnet, dass** die Anlagefläche (18) in der Ausnehmung (16) sich bogen- oder ringförmig um eine zentrale Öffnung (20) erstreckt.

13. Neutralisationseinheit nach einem der vorangehenden Ansprüche,
**dadurch gekennzeichnet, dass** die Stützfläche (30) von der Stirnseite eines axialen Vorsprunges (28) des Standfußes (10) gebildet wird.

14. Neutralisationseinheit nach einem der vorangehenden Ansprüche,
**dadurch gekennzeichnet, dass** der Standfuß (10) eine ringförmige KOntaktfläche aufweist, welche an einer Innenwandung der Ausnehmung (16) dichtend anliegt, wobei die Kontaktfläche eine axiale Länge aufweist, welche größer ist als die Steigung (S) der Anlage- (18) und/oderStützfläche (30).
